# EUROPÄISCHE PATENTANMELDUNG

(11) **EP 4 703 600 A1**
(43) Veröffentlichungstag der Anmeldung: **04.03.2026**
(21) Anmeldenummer: 25196527.3
(22) Anmeldetag: 18.08.2025
(51) Int. Cl.: F16F 9/04, F16J 3/04, B32B 1/08, B32B 25/04, B32B 25/14, B32B 25/16, B32B 25/18, B32B 25/20

(54) **HYBRIDBALG FÜR EINE HÖHENVERSTELLEINRICHTUNG EINES FAHRZEUGS**

(30) Priorität: 27.08.2024 DE 102024124386
(71) Anmelder: Vibracoustic SE, 69469 Weinheim (DE)
(72) Erfinder: Altinoluk, Ersan, 20359 Hamburg (DE); Bulling, Dieter, 30900 Wedemark (DE)
(74) Vertreter: Patentanwälte Olbricht Buchhold Keulertz

(57) **Zusammenfassung**

Die Erfindung betrifft einen Hybridbalg (1) für eine Höhenverstelleinrichtung (14) eines Fahrzeugs, umfassend einen mehrschichtigen Grundkörper (2) mit einem ersten freien Ende (3) und einem zweiten freien Ende () sowie mit einem zwischen den freien Enden (4) ausformbaren Arbeits-raum (5), wobei der Grundkörper (2) eine dem Arbeitsraum (5) zugewandte innere elastomere Schicht (6) sowie eine einer Umgebung (7) zugewandte äußerer elastomere Schicht (8) aufweist, wobei die innere elastomere Schicht (6) eine erste Materialzusammensetzung aufweist und die äußere elastomere Schicht (8) eine zweite Materialzusammensetzung aufweist. Der Hybridbalg ist dadurch gekennzeichnet, dass sich die erste Materialzusammensetzung und die zweite Materialzusammensetzung voneinander unterscheiden. Die Erfindung betrifft außerdem eine Vorrichtung zur Höhenverstellung eines Fahrzeugs, umfassend einen derartigen Hybridbalg (1).

## Beschreibung

Die Erfindung betrifft einen Hybridbalg für eine Vorrichtung zur Höhenverstellung eines Fahrzeugs, sowie eine Vorrichtung zur Höhenverstellung eines Fahrzeugs umfassend einen solchen Hybridbalg.

Vorrichtungen zur Höhenverstellung oder Niveauregulierung von Kraftfahrzeugen werden verwendet, um die Niveaulage eines Fahrzeugs oder einer Fahrerkabine einstellbar zu variieren oder bei unterschiedlicher Beladung konstant zu halten. Die Anpassung der Niveaulage wird durch Änderung eines Drucks in einem fluiddicht abgeschlossenen Arbeitsraum der Vorrichtung erreicht, wobei der Druck durch Zufuhr eines geeigneten Arbeitsmediums in den Arbeitsraum bzw. durch Ablassen des Arbeitsmediums aus dem Arbeitsraum verändert wird.

Herkömmliche Vorrichtungen weisen hierzu einen Balg aus einem Elastomermaterial auf, der zusammen mit einem Deckelelement und einem Abrollkolben den Arbeitsraum ausbildet. Als Arbeitsmedium wird dabei häufig Druckluft eingesetzt. Zur Niveauregulierung rollt der Balg mit mindestens einer Rollfalte in Abhängigkeit des Drucks im Arbeitsraum entlang der Außenfläche des Abrollkolbens auf bzw. ab und verändert dadurch seine Höhe.

Aus dem Stand der Technik bekannte Bälge sind in der Regel mehrschichtig aufgebaut, wobei eine zentrale Verstärkungsschicht, welche eine einzelne Lage oder mehrere Lagen von in einer elastischen Matrix eingebetteten Festigkeitsträgern umfasst, zu beiden Seiten von je einer Elastomerschicht bedeckt ist - also nach innen zum Arbeitsraum und nach außen zur Umgebungsluft.

Ein solcher Balg wird beispielsweise in EP 4 077 517 A1 beschrieben. Das dort verwendete Arbeitsmedium ist jedoch Druckluft, weshalb die Anforderungen an die innere Elastomerschicht im Wesentlichen dieselben sind wie die Anforderungen an die äußere Elastomerschicht. Folglich sind die dort verwendeten Elastomerschichten jeweils aus derselben Kautschukmischung aufgebaut.

Bei Bälgen hydraulisch arbeitender Systeme ist die Arbeitskammer allerdings anstelle von Druckluft mit einem Fluidmedium gefüllt. Je nach Anwendungsbereich können dabei unterschiedliche Medien zum Einsatz kommen, wie etwa Wasser, Glykole, Öle, Bremsflüssigkeiten oder Mischungen der vorgenannten Stoffe. Diese Fluidmedien beanspruchen die Innenseite des Balgs in einem anderen Maße als beispielsweise Luft, was zu einem vorzeitigen Ausfall der inneren Elastomerschicht führen kann - etwa durch das frühzeitige Auftreten von Rissen in der inneren Schicht.

Aufgabe der Erfindung ist es daher, die Nachteile im Stand der Technik zu beseitigen und einen Hybridbalg für eine Vorrichtung zur Höhenverstellung eines Fahrzeugs bereitzustellen, der eine gegenüber vorbekannten Lösungen erhöhte Lebensdauer aufweist.

Die Hauptmerkmale der Erfindung sind in Anspruch 1 angegeben. Weitere Aspekte der Erfindung sind in den Ansprüchen 14 und 16 genannt. Besondere Ausgestaltungen der Erfindung sind Gegenstand der Ansprüche 2 bis 13 bzw. des Anspruchs 15.

Die Aufgabe wird gemäß dem Hauptanspruch durch einen Hybridbalg für eine Höhenverstelleinrichtung eines Fahrzeugs gelöst, wobei der Hybridbalg einen mehrschichtigen Grundkörper mit einem ersten freien Ende und einem zweiten freien Ende sowie mit einem zwischen den freien Enden ausformbaren Arbeitsraum umfasst, wobei der Grundkörper eine dem Arbeitsraum zugewandte innere elastomere Schicht sowie eine einer Umgebung zugewandte äußerer elastomere Schicht aufweist, und wobei die innere elastomere Schicht eine erste Materialzusammensetzung aufweist und die äußere elastomere Schicht eine zweite Materialzusammensetzung aufweist. Der Hybridbalg ist dadurch gekennzeichnet, dass sich die erste Materialzusammensetzung und die zweite Materialzusammensetzung voneinander unterscheiden. Der Balg ist also mit Blick auf das verwendete Elastomermaterial nicht "sortenrein".

Als "Arbeitsraum" ist dabei der Bereich des Hybridbalgs zu verstehen, der bei bestimmungsgemäßem Gebrauch des Balgs zwischen der Verbindungsstelle des ersten freien Endes mit dem Abrollkolben und der Verbindungsstelle des zweiten freien Endes mit einem Deckelelement o. ä. liegt.

Ein derartig ausgestalteter Hybridbalg ist besonders gut für hydraulisch arbeitende Systeme geeignet, da die innere und die äußere elastomere Schicht des Balgs jeweils optimal an ihre jeweiligen Kontaktmedien angepasst werden können. Als Kontaktmedium wird dabei das Medium bezeichnet, das jeweils mit der äußeren bzw. mit der inneren Schicht des Balgs in Kontakt steht. Im Falle der äußeren Schicht wird das Kontaktmedium in der Regel Luft sein; das Kontaktmedium der inneren Schicht ist insbesondere ein inkompressibles Fluidmedium. Folglich kann für die äußere elastomere Schicht eine Materialzusammensetzung gewählt werden, die der Schicht eine besondere Beständigkeit gegenüber der Umgebungsluft verleiht. Darüber hinaus kann die Materialzusammensetzung der äußeren Schicht so gewählt werden, dass sie weiteren Umgebungseinflüssen standhält, beispielsweise Wärme, Kälte oder Ozon. Die innere Schicht des Balgs kann eine Materialzusammensetzung umfassen, die besonders beständig gegenüber dem jeweiligen Fluid im Arbeitsraum ist. Die Materialzusammensetzung der inneren Schicht wird dabei im Sinne dieser Offenbarung als "erste Materialzusammensetzung" bezeichnet, die Materialzusammensetzung der äußeren Schicht als "zweite Materialzusammensetzung". Dadurch, dass die erste und die zweite Materialzusammensetzung des Balgs jeweils optimal an ihre jeweiligen Kontaktmedien angepasst sind, wird das Risiko einer Verletzung oder eines Verschleißes des Hybridbalgs durch chemische Abnutzungen minimiert.

Gemäß einer Weiterbildung kann vorgesehen sein, dass der Arbeitsraum bei bestimmungsgemäßem Gebrauch des Hybridbalgs mit einem Fluid gefüllt ist. Dabei sollte der Arbeitsraum insbesondere fluiddicht sein. Auf diese Weise kann ein ungewollter Austritt des Fluids aus dem Arbeitsraum verhindert werden. Gleichzeitig wird auch ein ungewollter Lufteintritt aus der äußeren Umgebung in den Arbeitsraum verhindert.

Gemäß einer Weiterbildung kann vorgesehen sein, dass das Fluid im Arbeitsraum ausgewählt ist aus der Gruppe umfassend Bremsflüssigkeiten, Öle, insbesondere Hydrauliköle, Kühlflüssigkeiten, Glykole und Glykol-Wassergemische. Besonders vorteilhaft ist es, wenn Fluide gewählt werden, die für das spezifische Fahrzeug ohnehin verwendet werden, da hierdurch kein erhöhter Wartungsaufwand entsteht.

Gemäß einer Weiterbildung kann vorgesehen sein, dass die zweite Materialzusammensetzung ein Elastomer umfasst, welches ausgewählt ist aus der Gruppe umfassend Naturkautschuk, Polybutadien-Kautschuk ("BR"), Acrylnitril-Butadien-Kautschuk ("NBR"), hydrierten Acrylnitril-Butadien-Kautschuk, Silikon oder Ethylen-Propylen-Dien-Kautschuk ("EPDM"). Die genannten Werkstoffe zeichnen sich durch eine besonders hohe Beständigkeit gegenüber Öl- und/oder Glykolhaltigen Flüssigkeiten aus. BR zeichnet sich aufgrund seiner niedrigen Glasübergangstemperatur durch eine hohe Elastizität und sehr gute Kälteeigenschaften aus. NBR weist polare Gruppen auf, die mit nur wenig mit unpolaren Flüssigkeiten wie Benzin, Öl, oder Fetten wechselwirken, sodass der Werkstoff nach Kontakt mit diesen Medien nicht aufquillt. EPDM ist beständig gegenüber Temperaturen von bis zu 150 °C. Der Werkstoff ist ebenfalls resistent gegen polare Substanzen. Vorteilhafterweise sollten die erste und zweite Materialzusammensetzung so ausgewählt werden, dass sie aneinanderhaftend auszuführen sind. Falls eine als Zwischenschicht mit einer dritten Materialzusammensetzung eingesetzt wird, sollten die erste und zweite Materialzusammensetzung so ausgewählt werden, dass sie jeweils an der dritten Materialzusammensetzung haftend angeordnet werden können.

Gemäß einer Weiterbildung kann vorgesehen sein, dass die erste Materialzusammensetzung Chlorbutadien-Kautschuk-basierte Elastomere ("CR-basierte Elastomere" oder "CR-Elastomere") umfasst. CR-basierte Elastomere sind besonders robust gegenüber äußeren Umwelteinflüssen und eignet sich daher gut für die Verwendung in der äußeren elastomeren Schicht. Zudem gibt es mit CR-basierten Elastomeren jahrelange Erfahrungen in Bälgen, so dass sich ihre Eigenschaften gut bei der Auslegung vorhersagen und/oder simulieren lassen.

Gemäß einer Weiterbildung kann vorgesehen sein, dass der Grundkörper eine zwischen der inneren elastomeren Schicht und der äußeren elastomeren Schicht angeordnete Verstärkungsschicht aufweist. Die Verstärkungsschicht stabilisiert den Hybridbalg. Auf diese Weise wird gewährleistet, dass der unverstärkte Dichtungsbalg hohen Drücken standhalten kann, ohne sich in unerwünschtem Maße zu verformen oder zu reißen.

Gemäß einer Weiterbildung kann vorgesehen sein, dass die Verstärkungsschicht eine elastomere Matrix und mindestens eine Festigkeitsträgerlage umfasst, wobei die mindestens eine Festigkeitsträgerlage zumindest teilweise in der elastomeren Matrix eingebettet ist. Gemäß einer Weiterbildung kann insbesondere vorgesehen sein, dass die Verstärkungsschicht zwei Festigkeitsträgerlagen aufweist, die zumindest teilweise in der elastomeren Matrix eingebettet sind. Die Verwendung mehrerer Festigkeitsträgerlagen hat sich als besonders geeignet erwiesen, weil die Verstärkungsschicht dadurch bei geringem Gewicht ein hohes Maß an Stabilität aufweist.

Gemäß einer Weiterbildung kann vorgesehen sein, dass die elastomere Matrix eine dritte Materialzusammensetzung aufweist. Gemäß einer Weiterbildung kann außerdem vorgesehen sein, dass die dritte Materialzusammensetzung im Wesentlichen identisch mit der ersten Materialzusammensetzung ist oder dass die dritte Materialzusammensetzung im Wesentlichen identisch mit der zweiten Materialzusammensetzung ist. Hierdurch wir die Herstellung des Balgs vereinfacht, da zur Herstellung des Elastomers der Verstärkungsschicht die gleichen Vorrichtungen oder zumindest Teile davon verwendet werden können, die zur Herstellung der inneren oder der äußeren Elastomerschicht genutzt werden. Es ist allerdings auch denkbar, dass sich die dritte Materialzusammensetzung von der ersten und von der zweiten Materialzusammensetzung unterscheidet.

Gemäß einer Weiterbildung kann vorgesehen sein, dass jede Festigkeitsträgerlage eine Vielzahl von Festigkeitsträgern umfasst. Gemäß einer Weiterbildung kann vorgesehen sein, dass die Festigkeitsträger bevorzugt Fasern, Fäden oder Filamente aus Polyamid- und/oder Polyester, oder ein Gewebe aus Polyamid- und/oder Polyester sind. Die Verwendung einer solchen Faserverstärkung hat sich als besonders geeignet erwiesen, weil der Hybridbalg dadurch bei geringem Gewicht ein hohes Maß an Stabilität aufweist und weil seine Nachgiebigkeit in Faserrichtung auf die Nachgiebigkeit der Fasern begrenzt wird. Hierdurch ist der Balg außerdem einfach und kostengünstig herzustellen. Im Sinne dieser Offenbarung werden die Begriffe "Faser", "Faden" und "Filament" synonym verwendet, sofern sich aus dem jeweiligen Kontext nichts Gegenteiliges ergibt. Alle Begriffe bezeichnen im Wesentlichen längliche Gebilde aus natürlichen oder synthetischen Stoffen, wobei die natürlichen Faserstoffe einen pflanzlichen, tierischen oder mineralischen Ursprung haben können und wobei synthetischen Faserstoffe insbesondere Polymere umfassen.

Gemäß einem weiteren Aspekt betrifft die Erfindung eine Höhenverstelleinrichtung zur Höhenverstellung eines Fahrzeugs, umfassend zwei Hybridbälge gemäß dieser Offenbarung. Die Höhenverstelleinrichtung umfasst außerdem ein erstes Wandelement und ein axial zum ersten Wandelement beanstandetes zweites Wandelement, wobei das erste Wandelement, das zweite Wandelement und die Hybridbälge den Abreitraum ausbilden. Hierzu sind die freien Enden jedes Hybridbalgs am ersten bzw. am zweiten Wandelement befestigt, beispielsweise über Klemmringe. Eine derartige Höhenverstelleinrichtung ist besonders langlebig, da die elastomeren Schichten, die auf der inneren bzw. auf der äußeren Verstärkungslagenseite aufgetragen sind, an ihre jeweiligen Kontaktmedien angepasst werden können, wodurch eine hohe chemische Beständigkeit erreicht wird.

Gemäß einer Weiterbildung kann insbesondere vorgesehen sein, dass die Höhenverstellvorrichtung eine hydraulische Höhenverstelleinrichtung ist. Der Hybridbalg begrenzt dabei den druckbeaufschlagten Arbeitsraum, wobei der Balg eine Rollfalte ausbildet. Eine Änderung des Drucks im Arbeitsraum hat eine Volumenänderung zur Folge, die wiederum zu einer Bewegung des Balgs in der Rollfalte und somit zu einer Anpassung der Höhenposition des Fahrzeugs führt.

Gemäß einer Weiterbildung ist die Höhenverstelleinrichtung eine Fußpunktverstelleinrichtung für eine Spiralfeder in einem Fahrwerk eines Kraftfahrzeuges.

Gemäß einem weiteren Aspekt betrifft die Erfindung ein System zur Höhenverstellung eines Fahrzeugs, umfassend eine Höhenverstelleinrichtung gemäß dieser Offenbarung, eine erste Federauflage, eine zweite Federauflage, und eine zwischen erster Federauflage und zweiter Federauflage angeordnete Feder.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: zeigt einen schematischen Querschnitt durch den Grundkörper eines Hybridbalgs gemäß einer ersten Ausführungsform;
- Fig. 2: zeigt einen schematischen Querschnitt durch den Grundkörper eines Hybridbalgs gemäß einer zweiten Ausführungsform;
- Fig. 3: zeigt einen schematischen Querschnitt durch den Grundkörper eines Hybridbalgs gemäß einer dritten Ausführungsform;
- Fig. 4: zeigt ein System zur Höhenverstellung eines Fahrzeugs gemäß einer möglichen Ausführungsform.

In den Figuren sind gleiche oder einander entsprechende Elemente jeweils mit den gleichen Bezugszeichen bezeichnet und werden daher, sofern nicht zweckmäßig, nicht erneut beschrieben. Bereits beschriebene Merkmale werden zur Vermeidung von Wiederholungen nicht erneut beschrieben und sind auf alle Elemente mit gleichen oder einander entsprechenden Bezugszeichen anwendbar, sofern nicht explizit ausgeschlossen. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z. B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

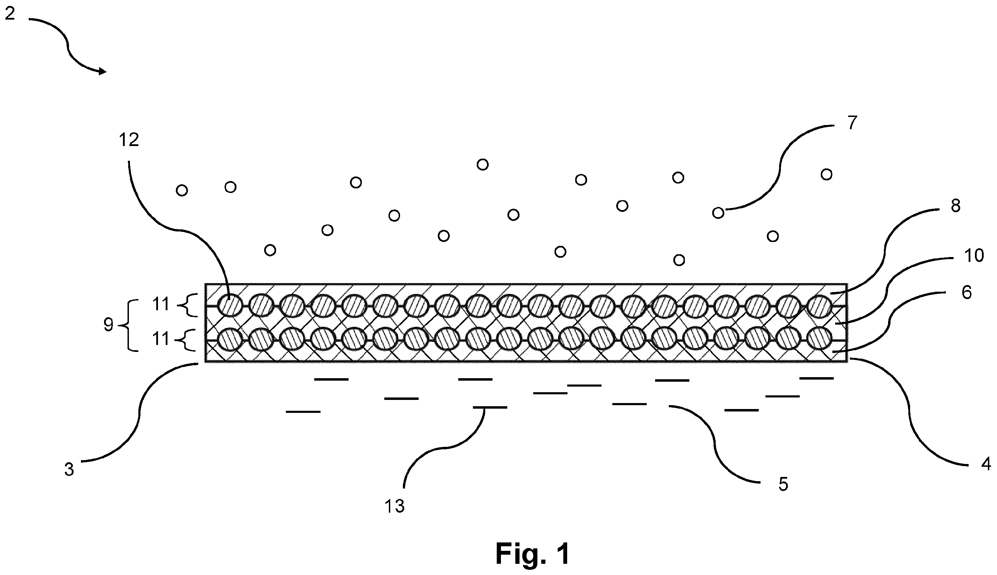

In Fig. 1 ist ein schematischer Querschnitt durch den Grundkörper 2 eines Hybridbalgs 1 gemäß einer möglichen Ausführungsform gezeigt. Der Grundkörper 2 weist ein erstes freies Ende 3 und ein zweites freies Ende 4 auf, wobei die beiden freien Enden 3, 4 mit z. B. jeweils einem Abrollkolben und mit eine m Deckelelement (beide nicht gezeigt) verbunden werden können und somit einen Arbeitsraum 5 ausbilden. Der Grundkörper umfasst eine dem Arbeitsraum 5 zugewandte innere elastomere Schicht 6 sowie eine der äußeren Umgebung 7 zugewandte äußerer elastomere Schicht 8 auf. Der Arbeitsraum 5 ist mit einem Fluid 13 gefüllt.

Die innere elastomere Schicht 6 weist eine erste Materialzusammensetzung auf und die äußere elastomere Schicht 8 weist eine zweite Materialzusammensetzung auf, die sich von der ersten Materialzusammensetzung unterscheidet. Die Verschiedenheit der beiden Materialzusammensetzungen wird im Falle des gezeigten Beispiels durch unterschiedliche Schraffuren der elastomeren Schichten 6, 8 dargestellt.

Zwischen der inneren und der äußeren elastomeren Schicht 6, 8 ist außerdem eine zweilagige Verstärkungsschicht 9 angeordnet. Die in Fig. 1 gezeigte Verstärkungsschicht 9 besitzt also zwei Festigkeitsträgerlagen 11, die in einer gemeinsamen elastomeren Matrix 10 der Verstärkungsschicht 9 eingebettet sind. Jede Festigkeitsträgerlage 11 umfasst eine Vielzahl fadenförmiger Festigkeitsträger 12, die bevorzugt aus Polyamid- und/oder Polyester hergestellt sind. In dem gezeigten Beispiel ist die dritte Materialzusammensetzung der elastomeren Matrix 10 der Verstärkungsschicht 9 im Wesentlichen identisch mit der ersten Materialzusammensetzung der inneren elastomeren Schicht 6, was durch die Verwendung ähnlicher Schraffuren dargestellt wird. Hierdurch wir die Herstellung des Balgs 1 vereinfacht, da die Verstärkungsschicht 9 zusammen mit der inneren oder Elastomerschicht 6 im selben Arbeitsabschnitt aufgetragen werden kann.

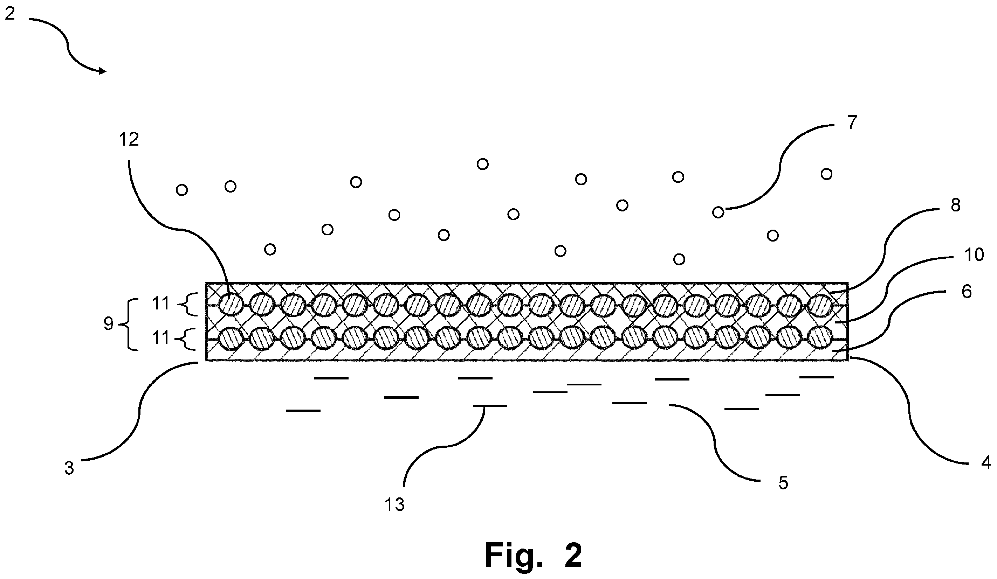

Fig. 2 zeigt einen schematischen Querschnitt durch den Grundkörper 2 eines Hybridbalgs 1 gemäß einer zweiten Ausführungsform. Der in Fig. 2 gezeigte Hybridbalg 1 unterscheidet sich vor allem dadurch vom Hybridbalg 1 aus Fig. 1, dass die dritte Materialzusammensetzung der elastomeren Matrix 10 der Verstärkungsschicht 9 im Wesentlichen identisch mit der zweiten Materialzusammensetzung der äußeren Schicht 8 ist.

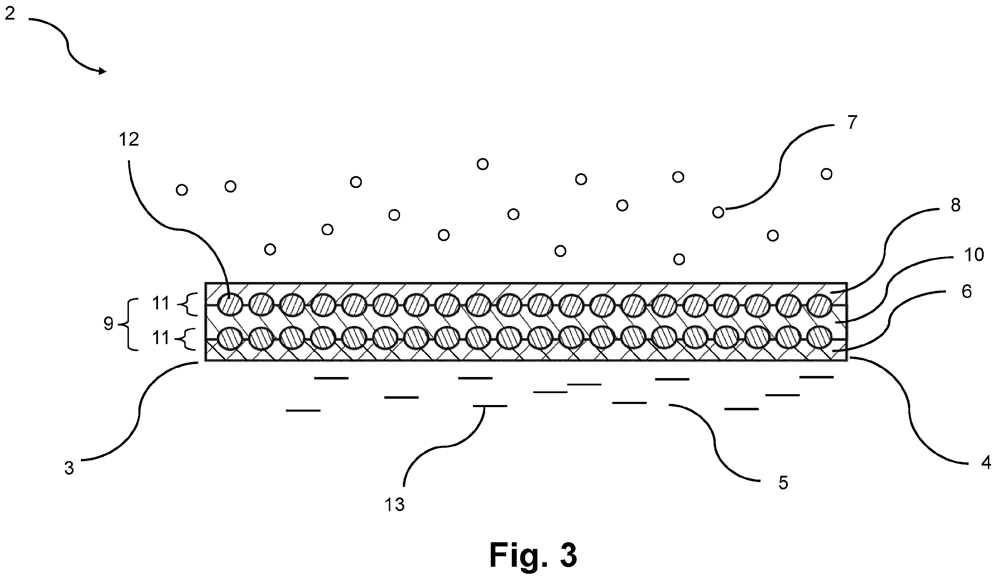

Fig. 3 zeigt einen schematischen Querschnitt durch den Grundkörper 2 eines Hybridbalgs 1 gemäß einer dritten Ausführungsform. Im Falle des Beispiels der Fig. 3 unterscheiden sich alle drei Materialzusammensetzungen voneinander. Die elastomere Matrix 10 der Verstärkungsschicht 9 weist demnach eine andere Materialzusammensetzung auf als die innere Schicht 6 und die äußere Schicht 8, welche sich ebenfalls hinsichtlich ihrer Materialzusammensetzungen voneinander unterscheiden.

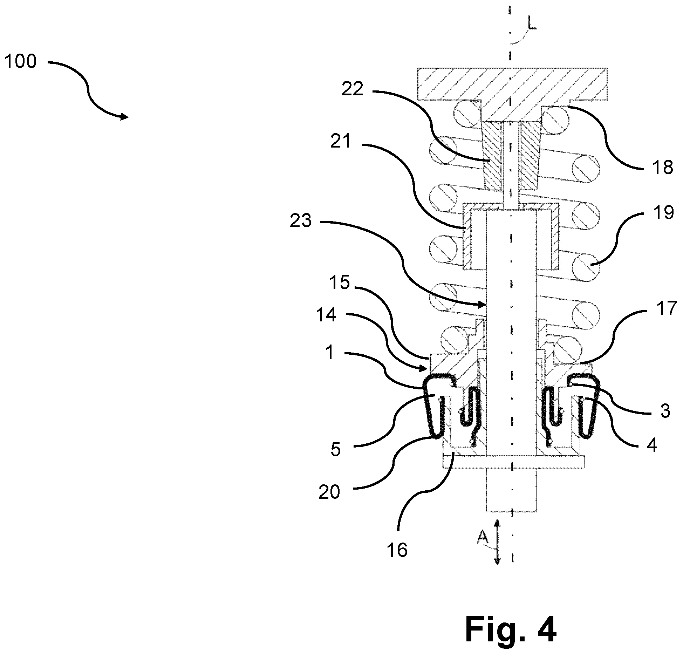

Fig. 4 zeigt ein System 100 zur Höhenverstellung eines Fahrzeugs gemäß einer möglichen Ausführungsform. Das System 100 dient der Dämpfung und dem Abfedern von Stößen eines Kraftfahrzeugs sowie der Niveauregulierung bzw. Höhenverstellung. Es weist zur Niveauregulierung des Kraftfahrzeugs eine Höhenverstelleinrichtung 14 auf, die im Falle von Fig. 4 eine Fußpunktverstelleinrichtung ist. Die Höhenverstelleinrichtung 14 umfasst ein erstes Wandelement 15 und ein zweites Wandelement 16, die entlang einer Längsachse L zueinander beabstandet sind. Die Wandelemente 15, 16 sind über zwei Hybridbälge 1 miteinander verbunden und schließen mit den Bälgen 1 unter Ausbildung einer Rollfalte 20 ein veränderbares Fluidvolumen in einem Arbeitsraum 5 ein. Dazu sind die freien Enden 3, 4 der Hybridbälge jeweils am ersten Wandelement 16 bzw. am zweiten Wandelement 17 befestigt. Das zweite Wandelement 16 fungiert außerdem als erste Federauflage 17 für eine Feder 19. Das in Fig. 4 gezeigte System 100 zeigt beispielhaft einen bestimmungsgemäßen Gebrauch des hier beschriebenen Hybridbalgs 1.

Durch das System 100 ragt die Längsachse L, wobei in diese Richtung auch die Höhenverstellung erfolgt. Das System 100 umfasst einen Dämpfer 23, der im gezeigten Beispiel ein Hydraulikdämpfer ist. Stirnseitig ist am Hydraulikdämpfer 23 ein Anschlagsdeckelelement 21 befestigt. Die Dämpferstange steht an gleicher Stirnseite aus dem Dämpfergehäuse heraus und ist mit einem Gegenlager 18 verbunden, welches als zweite Federauflage fungiert.

Das System 100 umfasst außerdem eine Feder 19, welche in Fig. 4 als Schraubendruckfeder dargestellt ist. Sie stützt sich zum einen Ende an der ersten Federauflage 17 und zum anderen Ende an der zweiten Federauflage ab, wobei die erste Federauflage 17 im gezeigten Beispiel die Oberseite des zweiten Wandelements 15 ist und die zweite Federauflage 18 das Gegenlager 18 ist. Eine Kraftbeaufschlagung der Höhenverstelleinrichtung 14 in Richtung des Gegenlagers 18 oder des Gegenlagers 18 in Richtung der Höhenverstelleinrichtung 14 führt zur Komprimierung der Feder 19. Um eine Überlastung oder sogar vollständige Komprimierung der Feder 19 zu verhindern, weist das System 100 außerdem eine elastische Zusatzfeder 22 auf. Die Zusatzfeder 22 ist zwischen der Höhenverstelleinrichtung 14 und dem Gegenlager 18 angeordnet. Zudem liegt die Zusatzfeder 22 entlang der Längsachse L dem Anschlagsdeckelelement 21 gegenüber. Zur Begrenzung des Einfederwegs kann die Zusatzfeder 22 folglich am Anschlagsdeckelelement 21 anschlagen.

Wird das Kraftfahrzeug beladen, gibt die Feder 19 um einen beladungsabhängigen Weg nach und das Kraftfahrzeug wird entsprechend abgesenkt. Dem kann nun die Niveauregulierung in Form der Höhenverstelleinrichtung 14 entgegenwirken. Um das ursprüngliche Niveau des Kraftfahrzeugs vor Beladung zu erreichen, wird in den Arbeitsraum 5 der Höhenverstelleinrichtung 14 zusätzliches Fluid 13 gepumpt, wodurch sich das Volumen des Arbeitsraums 5 vergrößert und wodurch das zweite Wandelement 16 der Höhenverstelleinrichtung 14 und der Fußpunkt der Feder 19 verschoben werden. Die vorbelastete Feder 19 wird entlang der Längsachse L verstellt und drückt das Gegenlager 18 und somit auch das Kraftfahrzeug auf das ursprüngliche Niveau.

Die Erfindung ist nicht auf eine der vorbeschriebenen Ausführungsformen beschränkt, sondern in vielfältiger Weise abwandelbar. Zur Vermeidung von Wiederholungen sollen vorrichtungsgemäß offenbarte Merkmale auch als verfahrensgemäß offenbart gelten. Ebenso sollen verfahrensgemäß offenbarte Merkmale als vorrichtungsgemäß offenbart gelten.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Hybridbalg
- 2: Grundkörper
- 3: Erstes freies Ende
- 4: Zweites freies Ende
- 5: Arbeitsraum
- 6: Innere elastomere Schicht
- 7: Umgebung
- 8: Äußere elastomere Schicht
- 9: Verstärkungsschicht
- 10: elastomere Matrix
- 11: Festigkeitsträgerlage
- 12: Festigkeitsträger
- 13: Fluid
- 14: Höhenverstelleinrichtung
- 15: Erstes Wandelement
- 16: Zweites Wandelement
- 17: Erste Federauflage
- 18: Gegenlager
- 19: Feder
- 20: Rollfalte
- 21: Anschlagsdeckelelement
- 22: Zusatzfeder
- 23: Dämpfer

- 100: System

- L: Längsachse
- A: Axialrichtung

## Patentansprüche

1. Hybridbalg (1) für eine Höhenverstelleinrichtung (14) eines Fahrzeugs, umfassend einen mehrschichtigen Grundkörper (2) mit einem ersten freien Ende (3) und einem zweiten freien Ende (4) sowie mit einem zwischen den freien Enden (3, 4) ausformbaren Arbeitsraum (5), wobei der Grundkörper (2) eine dem Arbeitsraum (5) zugewandte innere elastomere Schicht (6) sowie eine einer Umgebung (7) zugewandte äußerer elastomere Schicht (8) aufweist, wobei die innere elastomere Schicht (6) eine erste Materialzusammensetzung aufweist und die äußere elastomere Schicht (8) eine zweite Materialzusammensetzung aufweist, **dadurch gekennzeichnet, dass** sich die erste Materialzusammensetzung und die zweite Materialzusammensetzung voneinander unterscheiden.

2. Hybridbalg (1) nach Anspruch 1, **dadurch gekennzeichnet, dass** der Arbeitsraum (5) bei bestimmungsgemäßem Gebrauch des Hybridbalgs (1) mit einem Fluid (13) gefüllt ist.

3. Hybridbalg (1) nach Anspruch 2, **dadurch gekennzeichnet, dass** das Fluid (13) im Arbeitsraum (5) ausgewählt ist aus der Gruppe umfassend Bremsflüssigkeiten, Öle, insbesondere Hydrauliköle, Kühlflüssigkeiten, Glykole und Glykol-Wassergemische.

4. Hybridbalg (1) nach einem der vorhergehenden Ansprüche, **dadurch gekennzeichnet, dass** die erste Materialzusammensetzung ein Elastomer umfasst, welches ausgewählt ist aus der Gruppe umfassend Naturkautschuk, Polybutadien-Kautschuk, Acrylnitril-Butadien-Kautschuk, hydrierten Acrylnitril-Butadien-Kautschuk, Silikon oder Ethylen-Propylen-Dien-Kautschuk.

5. Hybridbalg (1) nach einem der vorhergehenden Ansprüche, **dadurch gekennzeichnet, dass** die zweite Materialzusammensetzung Chlorbutadien-Kautschuk-basierte Elastomere umfasst.

6. Hybridbalg (1) nach einem der vorhergehenden Ansprüche, **dadurch gekennzeichnet, dass** der Grundkörper (2) eine zwischen der inneren elastomeren Schicht (6) und der äußeren elastomeren Schicht (8) angeordnete Verstärkungsschicht (9) aufweist.

7. Hybridbalg (1) nach Anspruch 6, **dadurch gekennzeichnet, dass** die Verstärkungsschicht (9) eine elastomere Matrix (10) und mindestens eine Festigkeitsträgerlage (11) umfasst, wobei die mindestens eine Festigkeitsträgerlage (11) zumindest teilweise in der elastomeren Matrix (10) eingebettet ist.

8. Hybridbalg (1) nach Anspruch 7, **dadurch gekennzeichnet, dass** die Verstärkungsschicht (9) zwei Festigkeitsträgerlagen (11) aufweist, die zumindest teilweise in der elastomeren Matrix (10) eingebettet sind.

9. Hybridbalg (1) nach einem der Ansprüche 7 oder 8, **dadurch gekennzeichnet, dass** die elastomere Matrix (10) eine dritte Materialzusammensetzung aufweist.

10. Hybridbalg (1) nach Anspruch 9, **dadurch gekennzeichnet, dass** die dritte Materialzusammensetzung im Wesentlichen identisch mit der ersten Materialzusammensetzung ist oder dass die dritte Materialzusammensetzung im Wesentlichen identisch mit der zweiten Materialzusammensetzung ist.

11. Hybridbalg (1) nach einem der Ansprüche 7 bis 10, **dadurch gekennzeichnet, dass** jede Festigkeitsträgerlage (11) eine Vielzahl von Festigkeitsträgern (12) umfasst.

12. Hybridbalg (1) nach Anspruch 11, **dadurch gekennzeichnet, dass** die Festigkeitsträger (12) Fasern aus Polyamid- und/oder Polyester, oder ein Gewebe aus Polyamid- und/oder Polyester sind.

13. Hybridbalg (1) nach einem der vorhergehenden Ansprüche, **dadurch gekennzeichnet, dass** der durch den Grundkörper (2) ausformbare Arbeitsraum (5) fluiddicht ist.

14. Höhenverstelleinrichtung (14) für ein Fahrzeug, umfassend zwei Hybridbälge (1) nach einem der vorhergehenden Ansprüche,
ein erstes Wandelement (15) und ein axial zum ersten Wandelement (15) beanstandetes zweites Wandelement (16), wobei das erste Wandelement (15), das zweite Wandelement (16) und die zwei Hybridbälge (1) einen Abreitraum (5) ausbilden.

15. Höhenverstelleinrichtung (14) nach Anspruch 14, **dadurch gekennzeichnet, dass** die Höhenverstelleinrichtung (14) eine hydraulisch arbeitende Höhenverstelleinrichtung (14) ist.

16. System (100) zur Höhenverstellung eines Fahrzeugs, umfassend eine Höhenverstelleinrichtung (14) nach einem der Ansprüche 14 oder 15, eine erste Federauflage (17), eine zweite Federauflage (18), und eine zwischen erster Federauflage (17) und zweiter Federauflage (18) angeordnete Feder (19).
